# EUROPEAN PATENT APPLICATION

(11) **EP 1 675 204 A2**
(43) Date of publication of application: **28.06.2006**
(21) Application number: 05257922.4
(22) Date of filing: 21.12.2005
(51) Int. Cl.: H01M 8/24, H01M 8/06

(54) **Fuel battery**

(30) Priority: 22.12.2004 JP 2004370972
(71) Applicant: SHINKO ELECTRIC INDUSTRIES CO., LTD., Nagano-shi, Nagano 381-2287 (JP)
(72) Inventor: Horiuchi, Michio, c/o Shinko Electric Industries, Nagano-shi Nagano 381-2287 (JP); Suganuma, Shigeaki,c/o Shinko Electric Industries, Nagano-shi Nagano 381-2287 (JP); Watanabe, Misa,c/o Shinko Electric Industries, Nagano-shi Nagano 381-2287 (JP); Tokutake, Yasue,c/o Shinko Electric Industries, Nagano-shi Nagano 381-2287 (JP)
(74) Representative: Finnie, Peter John

(57) **Abstract**

A fuel battery (50) comprising a hollow fuel cell unit (54) and a gas combustor (56), the fuel cell unit (54) comprising a stacked body formed of an anode layer (52) and a cathode layer (53) on the inner side and the outer side, respectively, of a hollow body (51) of a solid electrolyte material, and the gas combustor burning a gaseous fuel and supplying a flame (57) to the anode layer (52).

## Description

### BACKGROUND OF THE INVENTION

### 1. Field of the Invention

The present invention relates to a fuel battery and, more specifically, to a solid electrolyte fuel battery using a gaseous fuel and having excellent portability.

### 2. Description of the Related Art

A fuel battery has been conventionally developed and put into practical use as a clean power generation alternative to thermal power generation or as an electric energy source for an electromotive vehicle in place of gasoline or the like.

Fuel cells used in fuel batteries, for which various power generation methods are known, includes a fuel cell using a solid electrolyte. One known example of a fuel cell using a solid electrolyte is a fuel cell where a sintered body comprising a stabilized zirconia having added thereto yttria (Y₂O₃) is used as an oxygen ion-conducting type solid electrolyte layer. A cathode layer is formed on one surface of the solid electrolyte layer and an anode layer is formed on the opposite surface. An oxygen or oxygen-containing gas is supplied to the cathode layer side and a fuel gas such as methane is supplied to the anode layer, whereby power generation is effected.

In this fuel cell, the oxygen (O₂) supplied to the cathode layer side is ionized to oxygen ion (O²⁻) at the boundary between the cathode layer and the solid electrolyte layer. The oxygen ion is conducted to the anode layer by the solid electrolyte layer and reacts with the fuel gas supplied to the anode layer side, such as methane (CH₄) gas, and water (H₂O) and carbon dioxide (CO₂) are finally produced thereat. As the oxygen ion releases an electron in this reaction, a potential difference is generated between the cathode layer and the anode layer. Accordingly, when a lead wire is connected to the cathode layer and the anode layer, the electron in the anode layer flows to the cathode layer side through the lead wire, and electric power is generated by the fuel cell. Incidentally, the operating temperature of this fuel cell is about 1,000°C.

However, a fuel battery using the fuel cell of this mode requires a separately provided oxygen or oxygen-containing gas supply chamber on the cathode layer side and fuel gas supply chamber on the anode layer side (fuel battery in the separate-type chamber mode) and, moreover, is exposed to an oxidizing atmosphere and a reducing atmosphere at a high temperature, so that the durability as a fuel cell can be hard to enhance.

On the other hand, there has been developed a fuel battery where a fuel cell of the battery comprises a solid electrolyte layer having provided on opposing surfaces thereof a cathode layer and an anode layer is placed in a mixed fuel gas prepared by mixing a fuel gas such as methane gas with an oxygen gas, and an electromotive force is generated between the cathode layer and the anode layer. In this fuel battery, the principle of generating an electromotive force between a cathode layer and an anode layer is the same as the fuel cell in the separate-type chamber mode as referred to above. However, as the fuel cell of the battery as a whole can be disposed substantially in the same atmosphere, a single-type chamber to which a mixed fuel gas of fuel gas and oxygen-containing gas is supplied can be established and the durability of the fuel cell of the battery can be enhanced.

However, this fuel battery with a single-type chamber must be operated also at a high temperature of about 1,000°C and thus there is a danger of causing explosion of the mixed fuel gas. When the oxygen concentration was made lower than the ignition limit so as to avoid this danger, there arose a problem that carbonization of the fuel such as methane proceeds and the cell performance decreases. Accordingly, a fuel battery with a single-type chamber, where a mixed fuel gas having an oxygen concentration enabling the prevention of progress of carbonization of the fuel can be used while avoiding explosion of the mixed fuel gas, has been proposed (see, for example, JP 2003-92124 A).

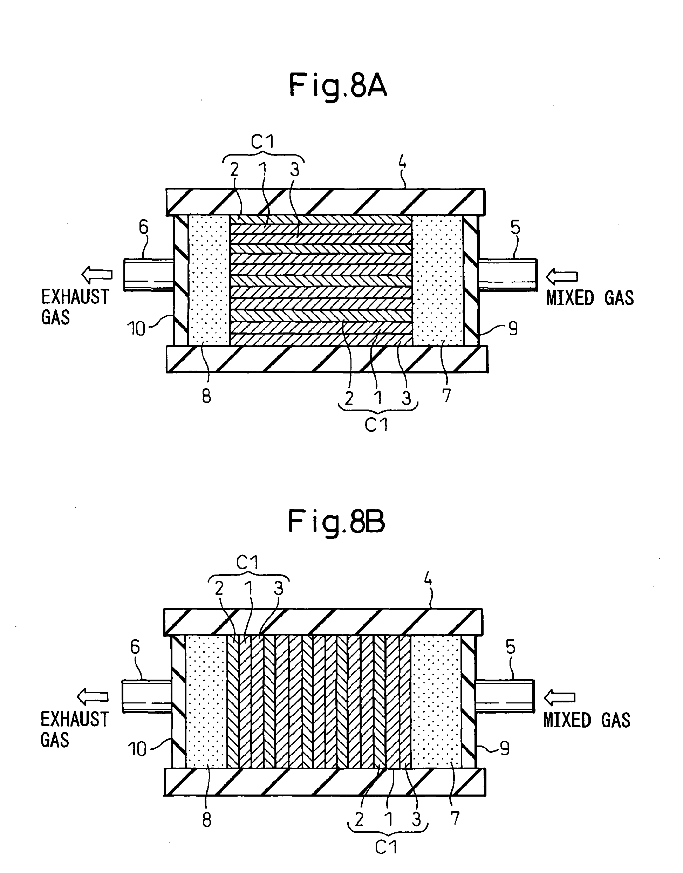

Fig. 8A shows the constitution of the proposed fuel battery with a single chamber. This fuel battery has a structure that fuel battery cells thereof each comprising a solid electrolyte layer are stacked in parallel with the flow of the mixed fuel gas. The fuel cell of the battery comprises a solid electrolyte layer 1 having a dense structure and porous layers formed as a cathode layer 2 and an anode layer 3 on both surfaces of the solid electrolyte layer 1. A plurality of fuel battery cells C1 having the same constitution are stacked in a ceramic-made container 4 and the fuel battery cells in the container 4 are tightly sealed with end plates 9 and 10 through packing materials 7 and 8, respectively.

In the container 4, a supply pipe 5 for supplying a mixed fuel gas containing a fuel such as methane and oxygen, and a discharge pipe 6 for discharging an exhaust gas are provided. In this fuel battery with a single chamber, the spaces inside the container 4, which are portions excluding the fuel battery cells in the container 4 and allow for flowing of a mixed fuel gas or an exhaust gas, are filled with a packing material 7 or 8 to establish an appropriate gap, so that when the fuel battery is operated, ignition is not brought about even if a mixed fuel gas within the ignition limit is present.

Fig. 8B shows another fuel battery with a single chamber. The fundamental constitution of the fuel battery shown in this drawing is the same as that of the fuel battery with a single chamber shown in Fig. 8A. However, fuel battery cells C1 each comprising a solid electrolyte layer are stacked in the axial direction of the container 4 to run orthogonally to the flow of the mixed fuel gas. In this case, the fuel battery cell C1 comprises a porous solid electrolyte layer 1 and porous layers formed as a cathode layer 2 and an anode layer 3 on both surfaces of the solid electrolyte layer 1, and a plurality of fuel battery cells C1 having the same constitution are stacked in a container 4.

In these fuel batteries the fuel battery comprises fuel battery cells housed in a chamber, but on the other hand, an apparatus where a solid electrolyte fuel battery cell is disposed in or near a flame and power generation is brought about by keeping the solid electrolyte fuel battery cell at its operating temperature by the effect of heat of the flame has been proposed (see, for example, JP 6-196176 A). Fig. 9 shows the constitution of this power generating apparatus.

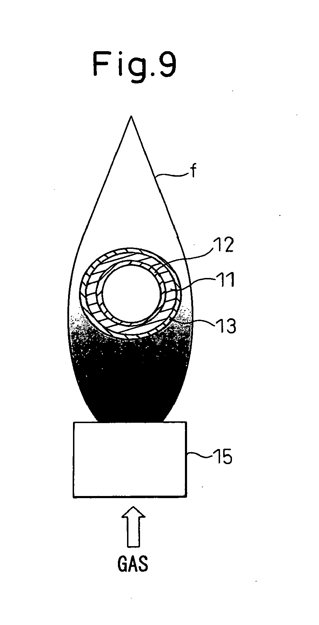

The fuel cell of the power generating apparatus shown in Fig. 9 comprises a tube body comprising a zirconia solid electrolyte layer 11, an anode layer 13 as a fuel pole formed outside the tube body, and a cathode layer 12 as an air pole formed inside the tube body. This solid electrolyte fuel cell is disposed in the state such that the anode layer 13 is exposed to the reducing flame portion of a flame f generated from a combustion apparatus 15 to which a fuel gas is supplied. With this arrangement, a radical component or the like present in the reducing flame is used as a fuel, and air is supplied by way of convection or diffusion to the cathode layer 12 inside the tube, whereby power generation as a fuel cell is effected.

Use of a tubular fuel cell is also described, for example, in JP 61-101972 A and JP 5-60310 A.

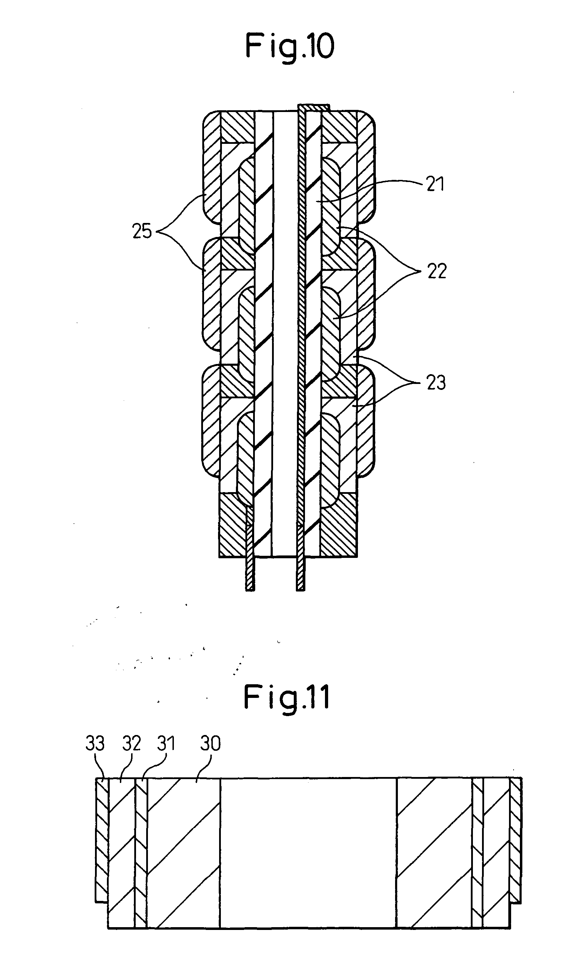

JP 61-101972 A discloses a fuel battery which is combined with a combustion device requiring an electric power and supplies an electric power to the combustion device. This fuel battery comprises, as shown in Fig. 10, a plurality of fuel cells each comprising a porous tube 21 having annularly provided on the outer periphery thereof a cathode 22, a solid electrolyte 23 and an anode 25, and these fuel cells are connected in series. The anode 25 on the outermost periphery is exposed to a flame in the combustion chamber of the combustion device, and oxygen is supplied to the cathode 22 through the porous tube 21 from air introduced into the porous tube 21.

JP 5-60310 A discloses a combustion apparatus equipped with a heater of vaporizing a liquid fuel for combustion, wherein a fuel cell for providing an electric power necessary to the vaporization is used. The fuel cell is, as shown in Fig. 11, constituted by a cell comprising a porous substrate tube 30 having sequentially formed on the periphery thereof an anode layer 31, a solid electrolyte layer 32 and a cathode layer 33, and is disposed in the periphery of a combustion space to surround flames.

Furthermore, JP 2004-139936 A discloses a fuel battery comprising a solid electrolyte fuel cell unit disposed in or near a flame, the solid electrolyte fuel cell unit being obtained by forming a cathode layer on one surface side of a solid electrolyte layer and forming an anode layer on the other surface side, wherein a solid electrolyte layer capable of preventing damage, such as cracking due to abrupt temperature change, is used and a mesh or wire of metal is used for at least either one of the cathode layer and the anode layer. This patent publication states that the fuel cell unit preferably has a plate-like shape so as to uniformly apply the flame to the fuel cell unit, but is silent on a tubular or cylindrical shape.

In the fuel batteries with a single-type chamber described in JP 2003-92124 A (Figs. 8A and 8B), unlike conventional solid electrolyte fuel batteries, the fuel and the air need not be strictly separated but instead, an airtight sealed structure has to be employed. Also, a plurality of plate-like solid electrolyte fuel cell unit are stacked and connected by using an interconnect material having heat resistance and high electric conductivity so as to elevate the electromotive force and thereby enable operating at a high temperature. Accordingly, the fuel battery with a single chamber using such a plate-like solid electrolyte fuel cell unit has a problem that the structure is large and the cost is high. Furthermore, at the operation of the fuel battery with a single chamber, cracking of the solid electrolyte fuel cell unit is prevented by gradually elevating the temperature to a high temperature and therefore, it takes a long time and a lot of labor to generate electricity.

On the other hand, the tubular solid electrolyte fuel cell unit described in JP 6-196176 A (Fig. 9) employs a form of directly utilizing a flame, and the fuel battery of this type is characterized in that the solid electrolyte fuel cell unit need not be housed in a container having an airtight structure and the system is an open-type system. Therefore, this fuel battery can generate electricity in a short time and its simple structure is advantageous to realize reduction in size, weight and cost of the fuel cell.

However, in the fuel battery of this type, an anode layer is formed on the outer surface of a tubular solid electrolyte layer and, therefore, a radical component supplied by a flame cannot reach the upper half of the anode layer, failing in effectively utilizing the entire surface of the anode layer formed on the outer surface of a tubular solid electrolyte layer. Because of this, the power generation efficiency is low.
Furthermore, as the solid electrolyte fuel cell unit is directly heated by flames, there have been problems that cracking is readily generated due to abrupt temperature change and the solid electrolyte fuel cell unit having cracks is disadvantageously broken into pieces and cannot generate electric power.

The same can be said for the fuel battery cell described in JP 61-101972 A where a cathode layer, a solid electrolyte layer and an anode layer 25 are annularly provided in this order on the outer periphery of a porous tube (Fig. 10).

In the fuel cell unit described in JP 5-60310 A where an anode layer, a solid electrolyte layer and a cathode layer are provided in this order on the outer periphery of a porous substrate tube (Fig. 11), the anode layer can be effectively utilized because the inner surface of the anode layer is entirely exposed to flames through the porous substrate tube but, due to the porous substrate tube intervening between the anode layer and the flame, the power generation efficiency of the fuel cell unit as a whole is not enhanced.

In the case of the plate-like fuel cell unit described in JP 2004-139936 A, flame must be applied to the entire cell unit for obtaining a sufficient power generation efficiency and therefore, particularly when the fuel cell unit has a large surface area, the structure of the fuel battery is liable to be complicated.

In general, conventional fuel batteries are used as stationary fuel batteries (for example, in the case of an alternative to thermal power generation) or in combination with a specific power consuming apparatus (for example, an electric car or a combustion apparatus described in JP 61-101972 A or JP 5-60310 A), and a fuel battery with high power generation efficiency for portable use is not known.

### SUMMARY OF THE INVENTION

An object of the present invention is to provide a solid electrolyte fuel battery with excellent portability, which can efficiently generate electric power by using a gaseous fuel.

The fuel battery of the present invention is characterized by comprising a fuel cell unit and a gas combustor, the fuel cell unit comprising a hollow stacked body formed of an anode layer and a cathode layer on the inner side and the outer side, respectively, of a hollow body of a solid electrolyte material, and the gas combustor burning a gaseous fuel and supplying flames to the anode layer.

The fuel cell unit may be formed of a single stacked body. Alternatively, the fuel cell unit may be formed of an assembly of a plurality of unitary cells. In this case, each unitary cell may comprise a substrate of a solid electrolyte material, an anode layer formed on the surface serving as the inner side in the assembly, and a cathode layer formed on the surface serving as the outer side, and may have an arbitrary shape such as strip, annulus or rectangle. In the fuel cell unit, the substrates of a solid electrolyte material form, as a whole, the hollow body of a solid electrolyte material, and the unitary cells may be connected in series or in parallel, or connection of unitary cells in series and connection in parallel may be mixed.

The anode layer and the cathode layer each preferably contains a mesh of metal buried therein or fixed thereto.

The fuel battery preferably further comprises a protector provided outside the fuel cell unit.

Also preferably, a mixed gaseous fuel of gaseous fuel and air is supplied to the gas combustor at a fuel gas concentration such that the ratio of gaseous fuel to air is not smaller than the stoichiometric composition for combustion.

The fuel battery of the present invention may be used by directly connecting it to a gaseous fuel container and may also be used in combination with a secondary battery.

The fuel battery of the present invention has a very simple structure, can be reduced in size and, therefore, is usable as a fuel battery and, particularly, as a mobile or portable fuel battery which uses a gaseous fuel.

### BRIEF DESCRIPTION OF THE DRAWINGS

Figs. 1A and 1B are a top view and a partial cross-sectional view, respectively, of an embodiment the fuel battery of the present invention.
Fig. 2 is a perspective view illustrating a fuel cell unit comprising a plurality of strip-shaped unitary cells.
Fig. 3 is a perspective view illustrating a fuel cell unit comprising a plurality of annular unitary cells.
Fig. 4 is a perspective view illustrating a fuel cell unit comprising a plurality of rectangular unitary cells.
Fig. 5 is a cross-sectional view illustrating the structure of unitary cell shown in Figs. 2 to 4.
Fig. 6 is a top view more specifically illustrating a fuel cell unit produced using strip-shaped unitary cells.
Fig. 7 is a schematic view illustrating a power generating apparatus utilizing the fuel battery of the present invention.
Figs. 8A and 8B each is a view showing a fuel battery according to prior art.
Fig. 9 is a view illustrating another fuel battery according to prior art.
Fig. 10 is a view illustrating still another fuel battery according to prior art.
Fig. 11 is a view illustrating yet still another fuel battery according to prior art.

### DETAILED DESCRIPTION OF THE INVENTION

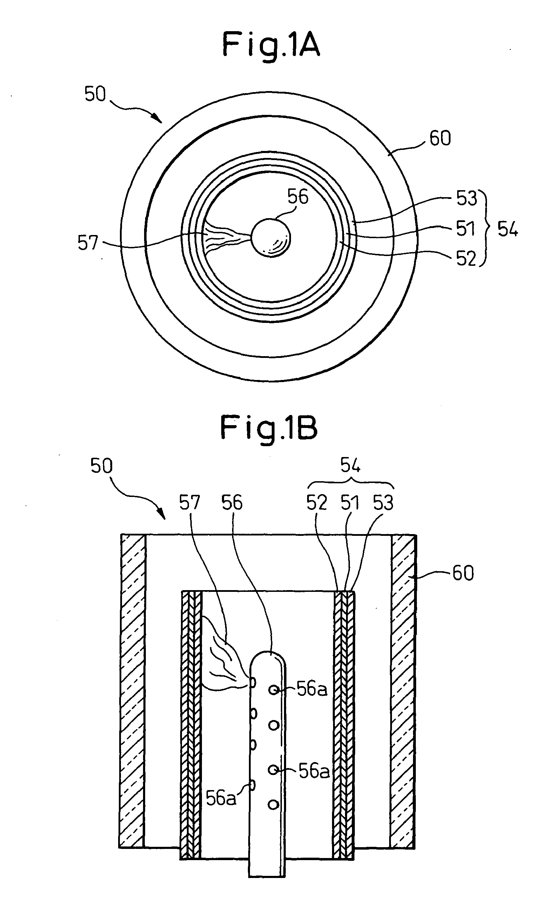

The fuel battery in one embodiment of the present invention is shown in the top view of Fig. 1A and the partial cross-sectional view of Fig. 1B. The fuel battery 50 of this embodiment comprises a fuel cell unit 54 of a hollow stacked body obtained by forming an anode layer 52 and a cathode layer 53 on the inner side and the outer side, respectively, of a cylindrical hollow body 51 produced from a solid electrolyte material, and a gas combustor 56 at the center within the fuel cell unit 54. The cathode layer 53 is exposed to an outer air containing oxygen, and the anode layer 52 is exposed to combustion flames 57 radiated from the gas combustor 56 on use of the fuel battery 50.

As the solid electrolyte material constituting the cylindrical hollow body 51, a known solid electrolyte for use in a fuel cell or battery may be used and examples thereof include the following:
(a) zirconia-based ceramics such as YSZ (yttria-stabilized zirconia), ScSZ (scandia-stabilized zirconia) and these ceramics doped with Ce, A1 or the like;
(b) ceria-based ceramics such as SDC (samaria-doped ceria) and GDC (gadolia-doped ceria);
(c) LSGM (lanthanum gallate); and
(d) bismuth oxide-based ceramics.

The material used for forming the anode layer 52 may also be a known material and examples thereof include the following:
(a) cermets of nickel with an yttria-stabilized zirconia-based, scandia-stabilized zirconia-based or ceria-based (e.g., SDC, GDC, YDC) ceramic;
(b) sintered bodies mainly comprising (from 50 to 99 wt%) an electrically conducting oxide such as nickel oxide having lithium solid-dissolved therein; and
(c) materials in which a metal of platinum-group element or an oxide thereof is blended to the material set forth in (a) or (b) in an amount of about 1 to 10 wt%.

Among these, (a) and (b) are preferred.

The sintered body mainly comprising an electrically conducting oxide of (b) has excellent oxidation resistance and therefore, can prevent occurrence of a phenomenon ascribable to oxidation of the anode layer, such as reduction in the power generation efficiency or incapability of power generation due to an increase in the electrode resistance of the anode layer, or separation of the anode layer from the solid electrolyte layer. As the electrically conducting oxide, the above-described nickel oxide having lithium solid-dissolved therein is preferred. Furthermore, high power generation performance can be obtained by using the material in which a metal of platinum-group element or an oxide thereof is blended to the material set forth in above (a) or (b).

The material used for the cathode layer 53 may also be a known material and examples thereof include, for example, manganic acid compounds (e.g., lanthanum strontium manganite), gallic acid compounds or cobaltic acid compounds (e.g., lanthanum strontium cobaltite) of a Group 3 element of the Periodic Table, such as lanthanum, having added thereto strontium (Sr).

The anode layer 52 and the cathode layer 53 both are formed of a porous body.

The hollow solid electrolyte body 51 may be dense or porous. The dense solid electrolyte layer is generally low in the thermal shock resistance and readily undergoes cracking due to abrupt temperature change. Furthermore, since the solid electrolyte layer is generally formed to a larger thickness than the anode layer and the cathode layer, cracks in the solid electrolyte layer may trigger cracking of the entire fuel cell unit. Accordingly, the hollow solid electrolyte body 51 is preferably porous.

When the hollow solid electrolyte body 51 is formed to be porous, cracking or the like does not occur and the thermal shock resistance is enhanced, even if the fuel cell unit positioned in or near a flame during power generation is subjected to an abrupt temperature change or a heat cycle with a large temperature difference. This is considered to result because when the solid electrolyte layer is porous, thermal expansion by heating is relieved in void portions. In the porous hollow solid electrolyte body, if the porosity thereof is less than 10%, the thermal shock resistance is not noticeably enhanced. In view of good thermal shock resistance, the porosity is preferably 10% or more, more preferably 20% or more.

The fuel cell unit 54 is produced, for example, as follows. A green sheet of a solid electrolyte material is processed to produce, for example, a cylindrical hollow solid electrolyte body. A paste of the anode layer material is coated on the inner surface of the hollow body and a paste of the cathode layer material is coated on the outer surface to form a hollow stacked body. Thereafter, the hollow stacked body is fired for sintering, whereby a hollow fuel cell unit having a stacked structure is obtained. In the hollow solid electrolyte body playing the role of a substrate of the fuel cell unit as well as in the anode and cathode layers on the inner and outer surfaces thereof, the porosity can be adjusted, for example, by the type and blending ratio of the powder materials including a pore-forming agent added to the green sheet or paste, or the firing conditions such as firing temperature, firing time and prefiring.

In the anode layer 52 and the cathode layer 53 of the fuel cell unit 54, a mesh of metal (not shown) may be buried or fixed. In this case, the metal mesh is embedded in or contacted with the paste of anode or cathode layer material coated on the hollow solid electrolyte body before firing, and then fired together with the paste, whereby the metal mesh may be buried or fixed.

As the mesh of metal, a material having a thermal expansion coefficient well harmonized with the cathode or anode layer in which the mesh of metal is buried or fixed, and having excellent heat resistance, is preferred. Specifically, platinum or a metal of a platinum-containing alloy formed into a mesh is ideal. However, as such a metal material is expensive, a stainless steel in SUS300s (e.g., 304, 316) or SUS400s (e.g., 430) prescribed by JIS, or Hastelloy (trade name) may be used in practice and this is advantageous in view of cost.

The meshed metal can be used for fixing a lead wire (metal wire) (not shown) which is connected to each of the anode layer 52 and the cathode layer 53 for taking out the electric power generated in the fuel battery. Not only that, the mesh metal contributes also to the enhancement of current collecting property and the enhancement of mechanical strength of the anode and cathode layers. Furthermore, the mesh metal has higher heat conductivity than the electrode materials of anode and cathode layers or the electrolyte material and therefore, provides a high effect of enhancing the thermal equalisation properties of the fuel cell unit 54 and in turn elevating the thermal shock resistance of the fuel cell unit. A cell unit not using a mesh of metal is advantageous in its low cost and useful for a fuel battery which is operated by uniform heating, but has a drawback that in a fuel battery operated by non-uniform heating or by means of quick heating, a temperature distribution is produced in the hollow solid electrolyte body 51 to create a thermally expanded portion and a thermally non-expanded portion, and as a result, the hollow solid electrolyte body 51 is readily broken due to the resultant stress.

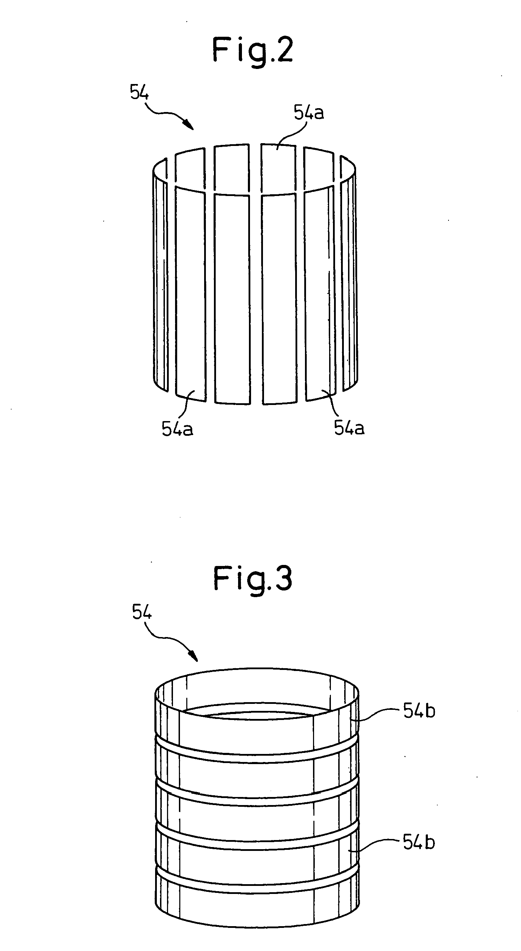

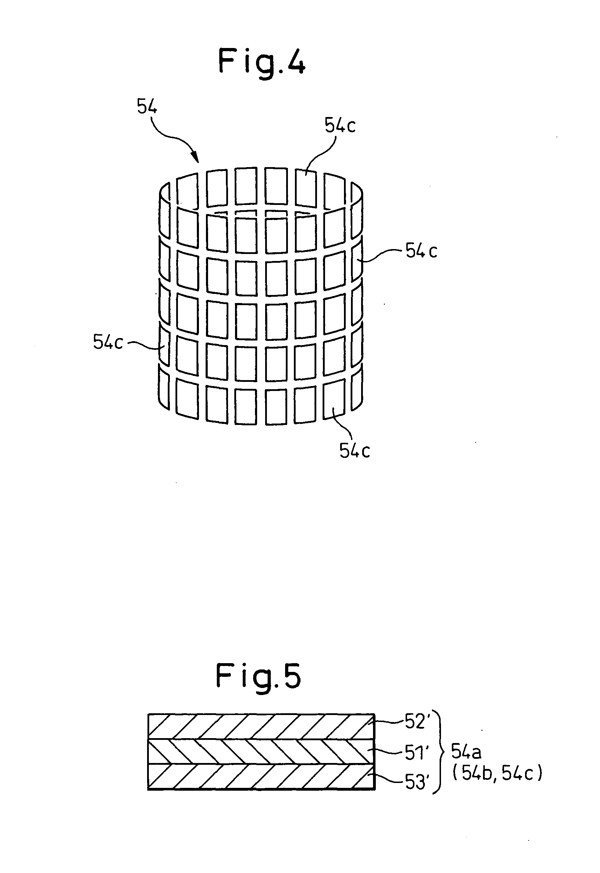

The fuel cell unit 54 may comprise an assembly of a plurality of unitary cells. In this case, as shown in Figs. 2, 3 and 4, the fuel cell unit 54 with a hollow stacked body may be fabricated by arranging strip-shaped unitary cells 54a (Fig. 2) in the circumferential direction, arranging annular unitary cells 54b (Fig. 3) in the axis direction, or arranging unitary cells 54c having a rectangular shape or the like (Fig. 4) in a grid or lattice pattern, thereby forming a hollow body as a whole. As illustrated in the cross-sectional view of Fig. 5, each unitary cell 54a, 54b or 54c is prepared in the form of a stacked body of, similarly to the fuel cell unit 54 of Fig. 1, a substrate 51' of a solid electrolyte material, an anode layer 52' formed on one side thereof, and a cathode layer 53' formed on the other side. The unitary cells may be connected in series or in parallel, or connection in series and connection in parallel may be mixed. In a fuel battery using a fuel cell unit constituted by a plurality of unitary cells in this way, the voltage and output of power generation can be obtained according to the combination of unitary cells.

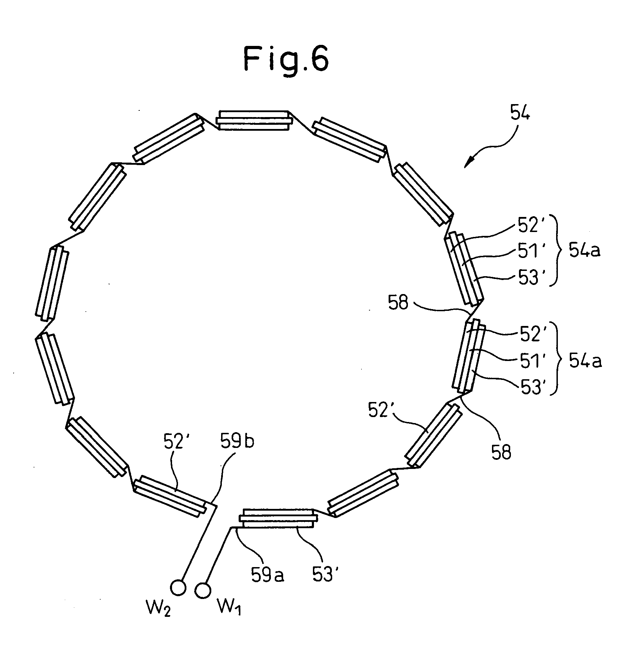

Fig. 6 shows a top view of a fuel cell unit 54 where strip-shaped unitary cells 54a are arranged as a ring in the circumferential direction. In the unitary cell 54a of this embodiment, a metal mesh is used in the anode layer 52' and the cathode layer 53', and adjacent unitary cells 54a are connected with each other by joining a metal mesh 58 in the anode layer 52' of one unitary cell to a metal mesh in the cathode layer 53' of another unitary cell. A plurality of unitary cells 54a are thus connected in series, and a lead wire w1 and a lead wire w2 are connected to the cathode layer 53' of the first unitary cell and the anode layer 52' of the last unitary cell, respectively. As a result, an output of the total electromotive forces of the plurality unitary cells 54a is obtained between the lead wire w1 and the lead wire w2. The connection of adjacent unitary cells with each other may also be performed by combining a metal mesh in the anode layer of one unitary cell and a metal mesh in the cathode layer of another unitary cell through a metal wire.

The fuel cell unit of Fig. 6 is not perfectly cylindrical but corresponds to a cylindrical hollow body with the cross section, constituted by 14 strip-shaped unitary cells, being tetradecahedral. Also, the fuel cell unit obtained by assembling rectangular unitary cells illustrated in Fig. 4 corresponds to a cylindrical hollow body having a polygonal cross section. In this way, the fuel cell unit in the present invention may be produced not only as a perfectly cylindrical hollow body but also as a cylindrical hollow body with a polygonal cross section.

The fuel cell unit 54 of Fig. 6 where strip-shaped unitary cells 54a are arranged like a ring in the circumferential direction can be produced, for example, by the following method. Using a plurality of plate-like substrates of a solid electrolyte material and having the same shape, which are produced by firing green sheets for the respective substrates, a paste formed into the anode layer 52' and a paste formed into the cathode layer 53' are coated on one surface and another surface, respectively, of the plate-like substrate by printing or the like. Subsequently, excluding a metal mesh 59a buried in or fixed to the cathode layer 53' of the first unitary cell to which the lead wire w1 is connected and a metal mesh 59b buried in or fixed to the anode layer 52' of the final unitary cell to which the lead wire w2 is connected, an operation of burying or fixing a metal mesh 58 to the anode layer 52' of one unitary cell and to the cathode layer 53' of the adjacent next unitary cell to extend across these layers is repeated to produce an assembly where unfired strip-shaped unitary cells are linked through a metal mesh, and then the pastes are dried. Thereafter, the assembly in the state of maintaining the linking of unfired unitary cells is fired. Finally, the fired unitary cell assembly is made cylindrical.

The gas combustor used in the fuel battery of the present invention may be any gas combustor as long as it can evenly supply a flame 57 to the anode layer 52 inside the hollow fuel cell unit 54 shown in Fig. 1A or 1B (for the sake of simplicity, only one flame 57 is shown in Figs. 1A and 1B). For example, like the combustor 56 shown in Fig. 1B, a combustor of an end-closed tube having provided on its side with a plurality of gas outlets 56a can be used. In the case of this combustor 56, flames can be uniformly applied to the anode layer 52 by adjusting the number and position of the gas outlets 56a.

The gas combustor 56 preferably supplies flames 57 so that the reducing flame portion in the vicinity of the root of flame is applied to the anode layer 52 of the fuel cell unit 54. When the anode layer 52 is exposed to the reducing flame, hydrocarbons, hydrogen, radicals and the like present in the reducing flame can be efficiently utilized as the fuel and moreover, even an anode layer prone to deterioration by oxidation can avoid the risk of deterioration and maintain the durability.

As the gaseous fuel burned in the combustor, for example, hydrogen gas, a hydrocarbon gas such as methane, ethane, propane or butane, a mixed gas thereof or a natural gas can be used.

The flame created by the gas combustor may be either a diffusion flame or a premixed flame, but since the diffusion flame is an unstable flame and readily incurs a decrease in function of the anode layer due to generation of soot, a premixed flame is more preferred. The premixed flame is advantageous in that the flame is stable and the flame size can be easily adjusted, and furthermore, this flame can be prevented from generating soot by adjusting the fuel concentration. In the case of a premixed flame, the mixed gas of gaseous fuel and air is preferably supplied to the fuel battery cell at a fuel gas concentration such that the ratio of gaseous fuel to air is not smaller than the stoichiometric composition for combustion.

As shown in Figs. 1A and 1B, in the fuel battery 50 of the present invention, a protector 60 may be disposed on the outer side of the hollow fuel cell unit 54 with spacing large enough to allow for the presence of a sufficient amount of air capable of supplying oxygen to the cathode layer 53. The protector 60 protects a person near the fuel battery from an accidental burn and at the same time, retains the heat in the fuel battery to prevent a reduction in its temperature, thereby contributing to the enhancement of power generation efficiency. The spacing between the cathode layer 53 and the protector 60 is preferably large enough to enable at least natural circulation of air outside the cathode layer 53 resulting from the air being indirectly heated through the cell unit 54 by heat of the flame 57 in the cell unit 54. The protector 60 can be produced from any heat-insulating material.

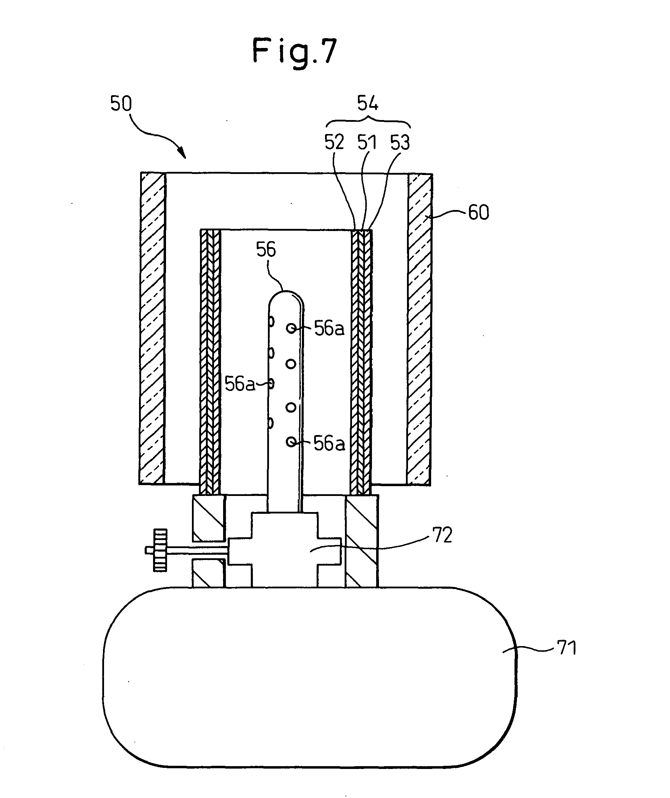

Fig. 7 shows an example of the power generating apparatus using the fuel battery 50 of the present invention. In this apparatus, the fuel battery 50 is disposed on a fuel tank 71 containing a gaseous fuel, and a gas combustor 56 is connected to the fuel tank 71 through a fuel regulator 72. Depending on the type of the fuel regulator 72, a premixed flame or a diffusion flame can be produced in the combustor 56. By designing the fuel battery 50 and the fuel tank 71 to be detachable, when the fuel in the tank 71 is consumed, the power generating apparatus can be continuously used by exchanging the tank with another tank.

In this way, the fuel battery of the present invention itself has a simple structure and is easily portable and, at the same time, this fuel battery can be used in combination with an easily portable gaseous fuel source, so that the fuel battery of the present invention can be utilized as a portable power generating apparatus useful, for example, at an outdoor event, for leisure activities or in a time of a disaster.

Furthermore, the fuel battery of the present invention can also be used in combination with a secondary battery.

### EXAMPLE

The present invention will be described in greater detail below by referring to an Example but, needless to say,the present invention is not limited to the Example.

A green sheet of solid electrolyte SDC (samaria-doped ceria, Ce_{0.8}Sm_{0.2}O_{1.9}) was processed to produce a cylindrical hollow body having an inner diameter of about 18 mm, a length of about 50 mm and a wall thickness of about 0.2 mm. A paste having a 25 wt%-70 wt% composition of 8 mol% Li-doped Ni oxide and SDC, to which 5 wt% of Rh₂O₃ was added, was coated on the inner surface of the hollow body produced above and a paste having a 50 wt%-50 wt% composition of SSC (samarium strontium cobaltite, Sm_{0.5}Sr_{0.5}CoO₃) and SDC was coated on the outer surface. Subsequently, a platinum mesh connected with a platinum wire was buried in the paste coated on each surface to produce an unfired fuel cell unit having a stacked structure, and this unit was fired at 1,200°C in air to obtain a fuel cell unit.

At the center within the thus-obtained hollow fuel cell unit, a flame nozzle made of a tube of about 10 mm diameter and about 30 mm long, closed at the distal end and having many holes with a diameter of about 1 mm on the side thereof was disposed. Radial flames were created using n-butane as the fuel and the power generating behavior of the unit was checked. The open circuit voltage was 0.74 V and the output was maximally 60 mW. By optimizing the nozzle-to-electrode distance, the thicknesses or uniformity of electrode layers, particularly, anode layer positioned on the inner surface of unit, and the connectivity of platinum mesh, it may be expected that a higher output be obtained.

The fuel battery of the present invention is usable as a conveniently portable and mobile fuel battery useful, for example, at an outdoor event, a leisure activity or in a time of a disaster.

## Claims

1. A fuel battery comprising a hollow fuel cell unit and a gas combustor, the fuel cell unit comprising a stacked body formed of an anode layer and a cathode layer on the inner side and the outer side, respectively, of a hollow body of a solid electrolyte material, and the gas combustor burning a gaseous fuel and supplying flames to the anode layer.

2. The fuel battery as claimed in claim 1, wherein said fuel cell unit is formed of a single stacked body.

3. The fuel battery as claimed in claim 1, wherein said fuel cell unit comprises an assembly of a plurality of unitary cells and each unitary cell comprises a substrate of a solid electrolyte material, an anode layer formed on the surface serving as the inner side in said assembly, and a cathode layer formed on the surface serving as the outer side, and wherein the substrates of a solid electrolyte material form, as a whole, the hollow body of a solid electrolyte material.

4. The fuel battery as claimed in claim 3, wherein said unitary cell has a shape of strip, annulus or rectangle.

5. The fuel battery as claimed in claim 3, wherein in said hollow fuel cell unit, said unitary cells are connected in series or in parallel or connection of unitary cells in series and connection in parallel are mixed.

6. The fuel battery as claimed in claim 1, wherein said anode layer and said cathode layer each contains a meshed metal material buried therein or fixed thereto.

7. The fuel battery as claimed in claim 1, which further comprises a protector provided outside said fuel battery cell.

8. The fuel battery as claimed in claim 1 wherein, in said gas combustor, a mixed gaseous fuel of gaseous fuel and air is supplied to the gas combustor at a fuel gas concentration such that the ratio of gaseous fuel to air is not smaller than the stoichiometric composition for combustion.

9. The fuel battery as claimed in claim 1, which is connected directly to a gaseous fuel container.

10. The fuel battery as claimed in claim 1, which is combined with a secondary battery.
